# FASCICULE DE BREVET EUROPEEN

(11) **EP 0 467 750 B1**
(45) Date de publication et mention de la délivrance du brevet: **17.08.1994**
(21) Numéro de dépôt: 91401896.5
(22) Date de dépôt: 09.07.1991
(51) Int. Cl.: B60S 1/16, F16C 33/74

(54) **Dispositif de montage d'un arbre d'entraînement, notamment pour essuie-glace**
Antriebsarmmontagevorrichtung, insbesondere für Scheibenwischer
Driving arm mounting arrangement, in particular for windshield wiper

(30) Priorité: 16.07.1990 FR 9009018
(43) Date de publication de la demande: 22.01.1992
(73) Titulaire: VALEO SYSTEMES D'ESSUYAGE, 78180 Montigny-Le-Bretonneux (FR)
(72) Inventeur: Blanchet, Pierre, F-86140 Lencloitre (FR)
(74) Mandataire: Gamonal, Didier

(56) Documents cités:
- EP-A- 0 316 831
- DE-A- 2 700 609
- FR-A- 2 165 540
- FR-A- 2 377 553
- GB-A- 2 088 707
- US-A- 2 781 942

## Description

La présente invention a pour objet un dispositif de montage d'un arbre d'entraînement animé d'un mouvement rotatif ou alternatif et destiné en particulier, mais non exclusivement, au montage d'un arbre de sortie d'un motoréducteur d'entraînement d'un bras d'essuie-glace sur un véhicule à moteur.

On sait que les balais d'essuie-glaces sont entraînés contre le pare-brise sur un secteur donné avec une certaine pression par un bras d'essuie-glace relié à un motoréducteur qui transforme directement ou indirectement le mouvement rotatif initial en un mouvement alternatif.

Un motoréducteur est habituellement constitué d'un moteur électrique dont le rotor se prolonge à l'intérieur d'un carter fermé comportant un réducteur, généralement constitué d'un système à engrenage, dont l'un des engrenages est lié, soit directement, soit par l'intermédiaire d'un système bielle-manivelle, à un arbre de sortie saillant au-delà du carter et utilisé comme arbre d'entraînement de mouvement d'un bras d'essuie-glace.

Comme déjà connu, le système d'engrenage porte, entre autres, sur l'une de ses roues dentées, des pistes de contacts électriques permettant par une sélection de celle-ci d'entraîner le ou les bras d'essuie-glace à des vitesses variables et de les arrêter de manière à ce qu'ils occupent toujours une position basse fixe ne gênant pas la visibilité du conducteur.

L'arbre d'entraînement fait saillie à la surface de la carrosserie et, la présence de pistes électriques implique que cet arbre d'entraînement soit monté de manière étanche à l'eau et aux impuretés afin d'éviter des court-circuits éventuels.

Un tel dispositif de montage est décrit dans FR-A-2 165 540 et selon le préambule de la revendication 1. Dans ce document, l'arbre moteur est entouré par un fût dont la partie antérieure (opposée au motoréducteur) présente une ouverture, dans laquelle peut être introduit un joint torique, et un palier constitué par une bague en matériau à faible coefficient de frottement. Le joint torique prend appui du côté du motoréducteur sur un épaulement et est immobilisé, à l'opposé de l'épaulement, en position axiale par une pièce rapportée à l'avant du fût qui est elle même est maintenue dans celui-ci par un circlips ou par tout autre moyen d'immobilisation analogue.

Un tel montage, si il répond bien aux différentes nécessités fonctionnelles se révèle d'un coût de revient élevé en particulier dans la mesure il nécessite un usinage important et une pièce apportée qui doit être immobilisée par des moyens de fixation également rapportés ce qui accroît les frais de main d'oeuvre.

La présente invention a pour objet de remédier à cet inconvénient et de permettre montage aisé sans nécessité de rapporter de pièces complémentaires.

Selon la présente invention, le dispositif de montage d'un arbre d'entraînement à travers un fût porté par un carter d'un motoréducteur d'essuyage et à l'intérieur duquel est monté au moins un palier et un joint torique d'étanchéité est caractérisé en ce que la partie antérieure du fût comprend une surépaisseur radialement interne dans la partie postérieure de laquelle est formé un siège pour un joint d'étanchéité.

L'invention apparaîtra au cours de la description qui va suivre d'un mode particulier de réalisation, donné uniquement à titre d'exemple non limitatif en regard des figures annexées sur lesquelles :
- la figure 1 représente en coupe partielle la sortie d'un motoréducteur d'essuie-glace ;
- la figure 2 représente une vue locale selon le repère A de la figure 1 ;
- la figure 3 est une variante de la figure 2.

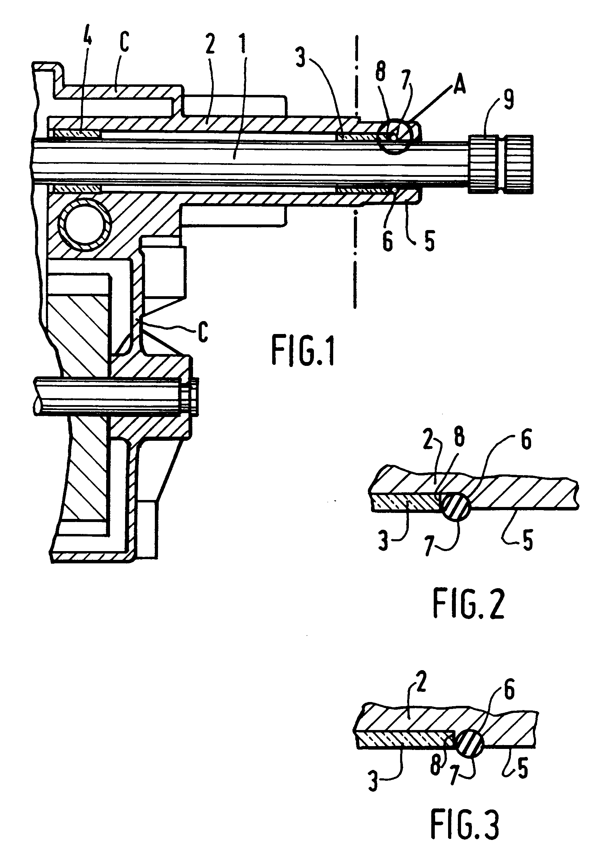

Sur la figure 1, un dispositif de montage de l'arbre de sortie est représenté et on distingue le carter C renfermant un motoréducteur du type connu et qui fait apparaître essentiellement l'arbre de sortie 1 servant d'arbre d'entraînement pour un bras d'essuie-glace ou pour un dispositif de transmission de mouvement du type à tringles (non représenté).

L'arbre de sortie 1 du motoréducteur fait saillie à l'extérieur de la carrosserie symbolisée sur la figure par un trait mixte interrompu. Il est entouré par un fût 2 à l'intérieur duquel sont montés un palier antérieur 3 et un palier postérieur 4, ces paliers étant constitués par exemple par des bagues de nylon ou de téflon en servant de paliers de guidage pour ledit arbre.

Dans ce qui suit, l'adjectif antérieur se rapporte aux pièces ou parties disposées vers l'extérieur alors que l'adjectif postérieur se rapporte aux pièces ou parties disposées vers le motoréducteur.

La partie antérieure du fût 2 présente une surépaisseur 5 radialement interne vers l'intérieur du fût 2 pouvant être circonférentiellement continu ou être constitué d'une multiplicité de secteurs circonférentiels (par exemple trois secteurs disposés à 120° l'un de l'autre). A la partie postérieure de cette surépaisseur est prévu un logement 6 servant de siège pour un joint d'étanchéité 7 de préférence torique.

Comme mieux visible sur la figure 2, le joint 7 s'appuyant sur son siège 6 est maintenu en position axiale, d'une part, par son siège, et, d'autre part, par l'extrémité antérieure 8 du palier 3.

Dans le cas de la figure 2, le siège 6 est constitué par une rainure sensiblement circulaire et a une configuration telle que, d'une part, le diamètre de la rainure semi-circulaire soit confondu avec le diamètre interne servant d'appui au palier 3 et, d'autre part, que cette rainure soit débouchante dans sa partie postérieure (celle dirigée vers le palier 3) de manière à obtenir une rainure en section de forme de quart de cercle.

Dans le cas de la figure 3, il a été envisagé que le siège 6, en forme sensiblement de rainure semi-circulaire, soit prévu à l'extrémité de la partie postérieure de la surépaisseur 5, et que l'extrémité libre postérieure de cette surépaisseur serve de butée en translation axiale du palier 3, de manière à éviter que ledit palier ne vienne écraser accidentellement, lors de son montage, le joint d'étanchéité 7.

Bien entendu le diamètre interne de la surépaisseur 5 est légèrement inférieur au diamètre interne des paliers 3,4, alors que le diamètre interne du joint 7 est légèrement supérieur au diamètre externe de l'arbre 1.

De manière connue en soi l'arbre 2 se prolonge par une tête cannelée 9 conformée pour être accouplée directement ou indirectement à un ou plusieurs bras d'essuie-glace ou à un dispositif d'entraînement de bras d'essuie-glace. Le fût 2 est avantageusement moulé avec le carter ou boîtier C.

Le mode de montage de l'arbre de sortie est le suivant :
- avant introduction de l'arbre 1, on dispose à l'intérieur du fût 2 successivement, le joint d'étanchéité 7, le palier 3, puis le palier 4. L'arbre 1 peut être alors glissé à l'intérieur du fût et l'ensemble est prêt à fonctionner.

L'usinage d'un tel dispositif est ainsi réduit et le montage est particulièrement simple.

## Revendications

1. Dispositif de montage d'un arbre d'entraînement à travers un fût (2) porté par un carter (C) d'un motoréducteur d'essuyage et à l'intérieur duquel est monté au moins un palier de guidage (3) et un joint d'étanchéité (7) entre ledit fût et ledit arbre, caractérisé en ce que la partie antérieure du fût (2) comporte une surépaisseur radialement interne (5) dans la partie postérieure de laquelle est formé un siège (6) pour le joint d'étanchéité (7).

2. Dispositif selon la revendication 1, caractérisé en ce que la surépaisseur (5) s'étend circonférentiellement en partie.

3. Dispositif selon la revendication 1, caractérisé en ce que la surépaisseur (5) s'étend circonférentiellement en totalité.

4. Dispositif selon l'une des revendications précédentes, caractérisé en ce que le siège (6) présente en section une forme semi-circulaire.

5. Dispositif selon l'une des revendications précédentes, caractérisé en ce que le siège (6) présente en section une forme en quart de cercle.

6. Dispositif selon l'une des revendications précédentes, caractérisé en ce que le joint (7) est maintenu en position axiale sur son siège (6) par le palier (3).

7. Dispositif selon l'une des revendications précédentes, caractérisé en ce que la partie postérieure de la surépaisseur (7) sert de butée axiale sur le palier (3).

8. Dispositif selon l'une des revendications précédentes, caractérisé en ce que la surépaisseur (5) présente un diamètre interne inférieur au diamètre interne du palier (3).

## Patentansprüche

1. Vorrichtung für den Einbau einer Antriebswelle durch einen Schaft (2), der an einem Gehäuse (C) einer Wischerantriebseinheit angeordnet ist und in dessen Innern mindestens ein Führungslager (3) und eine Dichtung (7) zwischen dem Schaft und der Welle eingesetzt sind , **dadurch gekennzeichnet**, daß der vordere Teil des Schaftes (2) einen radial innenliegenden Wulst (5) umfaßt, in dessen hinterem Teil ein Sitz (6) für die Dichtung (7) ausgebildet ist.

2. Vorrichtung nach Anspruch 1 , **dadurch gekennzeichnet**, daß sich der Wulst (5) teilweise über den Kreisumfang erstreckt.

3. Vorrichtung nach Anspruch 1 , **dadurch gekennzeichnet**, daß sich der Wulst (5) vollständig über den Kreisumfang erstreckt.

4. Vorrichtung nach einem der vorangehenden Ansprüche, **dadurch gekennzeichnet**, daß der Sitz (6) einen halbkreisförmigen Querschnitt aufweist.

5. Vorrichtung nach einem der vorangehenden Ansprüche, **dadurch gekennzeichnet**, daß der Sitz (6) einen viertelkreisförmigen Querschnitt aufweist.

6. Vorrichtung nach einem der vorangehenden Ansprüche, **dadurch gekennzeichnet**, daß die Dichtung (7) durch das Lager (3) in axialer Stellung auf ihrem Sitz (6) gehalten wird.

7. Vorrichtung nach einem der vorangehenden Ansprüche, **dadurch gekennzeichnet**, daß der hintere Teil des Wulstes (5) als axialer Anschlag an dem Lager (3) dient.

8. Vorrichtung nach einem der vorangehenden Ansprüche, **dadurch gekennzeichnet**, daß der Wulst (5) einen Innendurchmesser aufweist, der kleiner als der Innendurchmesser des Lagers (3) ist.

## Claims

1. A mounting for a drive shaft in a sleeve portion (2), which is carried by a casing (C) of a geared motor drive unit for a screen wiper, and within which there is mounted at least one guide bearing (3) and a sealing element (7) between the said sleeve portion and the said shaft, characterised in that the anterior part of the sleeve portion (2) has a radially inwardly thickened portion (5), in the posterior part of which there is formed a seating (6) for the sealing element (7).

2. A mounting according to Claim 1, characterised in that the thickened portion (5) extends partly circumferentially.

3. A mounting according to Claim 1, characterised in that the thickened portion (5) extends fully circumferentially.

4. A mounting according to one of the preceding Claims, characterised in that the seating (6) has a cross section of semicircular form.

5. A mounting according to one of the preceding Claims, characterised in that the seating (6) has in cross section the shape of a quarter of a circle.

6. A mounting according to one of the preceding Claims, characterised in that the sealing element (7) is retained in its axial position on its seating (6) by the bearing (3).

7. A mounting according to one of the preceding Claims, characterised in that the posterior part of the thickened portion (7) acts as an axial abutment on the bearing (3).

8. A mounting according to one of the preceding Claims, characterised in that the thickened portion (5) has an internal diameter smaller than the internal diameter of the bearing (3).
